# NEW EUROPEAN PATENT SPECIFICATION

(11) **EP 1 189 506 B2**
(45) Date of publication and mention of the opposition decision: **21.11.2007**
(45) Mention of the grant of the patent: 21.04.2004
(21) Application number: 00941717.1
(22) Date of filing: 26.06.2000
(51) Int. Cl.: A01N 25/34, A01N 25/10, A01N 37/40, A47K 10/16, D21H 21/36, D21H 27/30

(54) **TISSUE PRODUCTS HAVING ANTIVIRAL PROPERTIES**
TISSUEPRODUKTE MIT ANTIVIRALEN EIGENSCHAFTEN
PRODUITS TISSULAIRES AYANT DES PROPRIETES ANTIVIRALES

(30) Priority: 29.06.1999 US 342777
(43) Date of publication of application: 27.03.2002
(73) Proprietor: THE PROCTER & GAMBLE COMPANY, Cincinnati, Ohio 45202 (US)
(72) Inventor: DECKNER, George, Endel, Cincinnati, OH 45249 (US); GBADAMOSI, Kamilah, Apewaiye, Fairfield, OH 45014 (US); KELLY, Stephen, Robert, Owenton, KY 40359 (US); KLOFTA, Thomas, James, Cincinnati, OH 45249 (US)
(74) Representative: Kremer, Véronique Marie Joséphine
(86) International application number: PCT/US2000/017529
(87) International publication number: WO 2001/000023

(56) References cited:
- WO-A-89/10745
- WO-A-95/28165
- WO-A-98/40207
- GB-A- 2 103 089
- GB-A- 2 134 781
- US-A- 4 355 021
- US-A- 4 643 939
- US-A- 4 738 847
- US-A- 4 764 418
- US-A- 5 906 814
- J.S.Oxford, C.W.Potter,C.McLaren and W.Hardy,Applied Microbiology ,April 1971, pages 606-610
- Matindale,The complete drug reference, Ed.Kathleen Parfitt, Thirty Second Edition,Pharmaceutical Press, 1999,pages 1101-1102

## Description

### TECHNICAL FIELD

This invention relates to tissue products comprising water soluble films utilized as carriers for antiviral compositions and a method for making.

### BACKGROUND OF THE INVENTION

Whether it be a household, workplace, educational facility or any other location where people tend to gather, preventing the spread of germs is a difficult but yet desirable task. For instance, it is well documented that many hours of productive work are lost due to individuals becoming infected with the common cold or influenza virus.

When one suffers from the common cold or influenza virus, one's mucus is the source of a very high concentration of viruses. After the mucus is deposited into a facial tissue, the virus within the mucus has the potential to infect other individuals coming into contact with it. Transfer of this mucus on the tissue to another individual will likely be through accidental or unintentional contact.

As an example of a possible transfer scenario, consider a cold sufferer who accidentally leaves a mucus infected facial tissue on a hard surface of some type. This hard surface might be a kitchen countertop, a bathroom vanity surface, an office desk or some other piece of furniture. Another family member or colleague may accidentally come into contact with the infected mucus after picking up the tissue to throw it away. After coming into such contact with the mucus on the tissue, it is very possible for that individual to become infected with the viral condition (i.e., common cold, influenza) especially if the infected mucus comes into contact with that individual's mucosal membranes.

Another transmission scenario is through the disposal of the facial tissues contaminated with the virus containing mucus. After a household waste basket becomes filled with trash containing a high concentration of infected tissues, it obviously needs to be disposed of in some manner. During this transfer of the household trash into another larger disposal unit, the individual transferring the trash may come into contact with the contaminated tissue. Once again, this individual is at a higher risk for contracting the virus.

Many other potential modes of virus transmission are possible after the facial tissue has become infected with the mucus. To reduce the probability of cold and influenza transmission, it is desirable to contain the virus to the tissue as well as kill this contained virus. Furthermore, it is desirable to delay the release of the antiviral agent contained in the tissue until liquid actually contacts the antiviral agent thereby reducing the potential for premature release of the antiviral agent as well as reducing the potential for skin irritation.

U.S. 4,738,847 issued to Rothe et al. on April 19, 1988 purports to teach a three ply cellulosic tissue wherein a virucidal composition is substantially confined to the center ply.

U.S. 4,764, 418 issued to Kuenn et al. on August 16, 1988 purports to teach a tissue comprising a cellulosic web, water-soluble humectant and carboxylic acid.

Both of these suffer from the same drawback. Neither is able to prevent the premature release and activation of the virucide.

Accordingly, it is desirable to provide a tissue product having an antiviral composition which utilizes a water soluble film as a vehicle for containing the antiviral agent. It is also desirable to provide a tissue product having an antiviral agent wherein the antiviral agent is not activated until contacted by liquid (e.g. water, mucus, etc.). Furthermore, it is desirable to provide a tissue product which confines the virus to the tissue.

The benefits of utilizing such a tissue include: (1) a tissue product that is mild to the skin; (2) a tissue product in which the antiviral agent remains in the tissue; (3) a tissue product in which the virus is confined to the tissue; and (4) a tissue product in which the antiviral agent is not released and activated until contacted by a liquid such as the virus-containing mucus. This allows maximization of the antiviral agent contact time with the virus as well as maximization of the antiviral agent available for contact with the virus. Hence, more efficient and effective virus kill is provided thereby inhibiting further virus transmission and contamination.

### SUMMARY OF THE INVENTION

The present invention relates to tissue products having antiviral compositions comprising water soluble films and a method for making the tissue products. The tissue products include an antiviral composition. The antiviral composition comprises a film-forming water soluble carrier(s) which makes up from 1% to 90% by weight of the antiviral composition and an antiviral agent(s) which makes up from 0.1% to 80% by weight of the antiviral composition.

Film-forming water soluble carriers are poly-N-vinyl-pyrrolidone, copolymers of vinyl pyrrolidone and vinyl acetate, methylcellulose, ethylcellulose, water soluble hydroxyalkyl ethers of cellulose, hydroxyethylcellulose, ethylhydroxyethylcellulose, methylhydroxypropylcellulose, hydroxypropylguar, hydroxypropylstarch, chitosan, carboxymethylchitosan, arabinogalactan, hydroxypropylcellulose, or mixtures thereof.

Antiviral agents are carboxylic acids C₁ to C₁₂ saturated, unsaturated, or mixtures thereof of carboxylic acids possessing 1 to 4 carboxylic acid groups and having at least one hydroxyl group substituted on the C₂ alpha carbon; C₁ to C₁₂ saturated, unsaturated, aromatic, or mixtures thereof of carboxylic acids possessing 1 to 4 carboxylic acid groups and having at least one hydroxyl group substituted on the C₃ beta carbon; C₁ to C₁₂ saturated, unsaturated, aromatic, or mixtures thereof of carboxylic acids possessing 1 to 4 carboxylic acid groups; C₁ to C₁₂ saturated, unsaturated, aromatic, or mixtures thereof of carboxylic acids possessing 1 to 4 carboxylic acid groups and having a hydroxyl group(s) substituted on carbon number(s) C₄ or above; or mixtures thereof.

The antiviral composition may also include an optional nonionic surfactant wherein the nonionic surfactant comprises from about 0.1% to 90% of the antiviral composition by weight. A suitable nonionic surfactant includes but is not limited to an alkoxylated alcohol having an HLB of about 8 to 20 and the following formula: 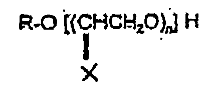 wherein: R= C₂ - C₅₀ and may be either branched, unsaturated, or saturated
n=10-40
X = hydrogen, methyl, or ethyl.

The antiviral composition may also include an optional thickening agent wherein the thickening agent makes up from 0.1% to 15% by weight of the antiviral composition.

The invention also includes a tissue product wherein the tissue product comprises one or more fibrous ply(ies). One or more fibrous plies may include an antiviral composition. For example, the tissue product may include a first fibrous ply whereby the first fibrous ply includes an antiviral composition comprised of a film-forming water soluble carrier(s) which makes up from 1% to 90% by weight of the antiviral composition and an antiviral agent(s) which makes up from 0.1% to 80% by weight of the antiviral composition.

The tissue product may include a second fibrous ply wherein the second fibrous ply is joined in a face to face relationship with the first fibrous ply. The second fibrous ply may optionally include an antiviral composition.

The tissue product also include a moisture barrier. The moisture barrier may be impregnated into one or more fibrous plies and or joined in a face to face relationship with one or more of the fibrous plies. The moisture barrier may also optionally include an antiviral composition.

The invention further includes a process for making a tissue product. The process comprises the steps of providing a tissue web. An antiviral composition is applied to the tissue web. A moisture barrier is included whereby the moisture barrier is impregnated into or disposed thereon the tissue web. The moisture barrier may optionally include an antiviral composition.

### BRIEF DESCRIPTION OF THE DRAWINGS

Fig. 1 is a vertical sectional view showing a first fibrous ply which includes the antiviral composition of the present invention.
Fig. 2 is a vertical sectional view showing a first and second fibrous plies, the first fibrous ply including the antiviral composition of the present invention.
Fig. 3 is a vertical sectional view showing three fibrous plies, all three fibrous plies including the antiviral composition of the present invention, the second fibrous ply interposed between the first and third fibrous plies.
Fig. 4 is a vertical sectional view showing a first fibrous ply, a second fibrous ply, and a moisture barrier interposed between the first and second fibrous plies, the moisture barrier including the antiviral composition of the present invention.
Fig. 5 is a vertical sectional view showing a first fibrous ply, a second fibrous ply, and a moisture barrier interposed between the first and second fibrous plies, the second fibrous ply including the antiviral composition of the present invention.
Fig. 6 is a schematic representation illustrating a process for applying the antiviral composition of the present invention to a tissue webs and/or a moisture barrier.

### DETAILED DESCRIPTION OF THE INVENTION

As used herein, the term "comprising" means that the various components, ingredients, or steps, can be conjointly employed in practicing the present invention. Accordingly, the term "comprising" encompasses the more restrictive terms "consisting essentially of" and "consisting of."

As used herein, "antiviral agent" refers to something capable of killing viruses such as rhinovirus and influenza.

As used herein, "antiviral composition" refers to a composition which includes one or more antiviral agents.

As used herein, "film-forming" refers to a means of uniformly holding and delivering a functional material to a substrate.

As used herein, the terms "tissue paper web", "paper web", "web", "paper sheet", "tissue product", and "paper product" all refer to sheets of paper made by a process comprising the steps of forming an aqueous papermaking furnish, depositing this furnish on a foraminous surface, such as a Fourdrinier wire, and removing the water from the furnish as by gravity or vacuum-assisted drainage, with or without pressing, and by evaporation.

As used herein the term "multi-ply tissue paper product" refers to a tissue paper comprised of at least two plies. Each individual ply in tum can be comprised of single-layered or multi-layered tissue paper webs. The multi-ply structures are formed by bonding together two or more tissue webs such as by gluing or embossing. Suitable methods for joining plies are disclosed in commonly assigned U.S. Patent Nos.: 3,414,459 issued to Wells on December 3, 1968; 3,867,225 issued to Nystrand on February 18, 1975; 4,481,243 issued to Allen on November 6, 1984; and 5,294,475 issued to McNeil on March 15, 1994.

As used herein, "carrier" and "vehicle" refer to a means for delivering the antiviral composition to the tissue.

As used herein, "moisture barrier" refers to a means for inhibiting the penetration of moisture through tissue.

As used herein the terms "through air drying" and "blow through drying" refer to a technique of removing water from the web by drying the web with hot air.

As used herein, the terms "mechanical dewatering", "conventional wet pressing", and "conventional felt pressing" all refer to a technique of removing water from the web by mechanically pressing the web with a dewatering felt.

Though the principle use of this invention is in connection with facial tissues, it is also applicable to other tissue products including but not limited to: bath tissue, table napkins, toweling, and the like. The tissue paper may be conventionally wet pressed, through air dried tissue, high bulk pattern densified tissue paper, and high bulk, uncompacted tissue paper.

All percentages, ratios and proportions used herein are by weight unless otherwise specified.

### Antiviral Composition

The antiviral composition is comprised of a film-forming water soluble carrier, antiviral agent(s), optional surfactant(s), and other optional ingredients such as but not limited to thickening agents, dyes, emollients, skin soothing agents, skin sensates, vitamins, and scents.

### A. Film-forming Water Soluble Carrier

While not wishing to be bound by theory, it is believed that upon drying the film-forming water soluble carrier forms a thermoplastic film. The film formed by the film-forming water soluble carrier acts as a vehicle for delivering the other components of the antiviral composition (e.g. the antiviral agent, etc.) to the tissue substrate. Because the other components of the composition are contained (encompassed) within the film, the components are not activated (i.e.; are not released) until the film is contacted by a liquid medium (e.g., water, mucus, etc.). Hence, retention of the antiviral composition on the tissue is maximized. There is little opportunity that these other components will be released prematurely thus maximizing the efficacy of the antiviral composition upon the infected mucus.

Furthermore, it is believed that the potential for skin irritation is minimized as the antiviral agent is encompassed within the film and hence will not migrate out of the tissue. Yet further, as the antiviral agent remains within the film and is not activated nor released from the film until contacted by a liquid medium, the amount of antiviral agent available to kill the virus is maximized. Hence efficacy of the virucidal agent is enhanced.

The film-forming water soluble carriers of this invention have a molecular weight of about 2,000,000 or less, preferably about 500,000 or less and more preferably about 100,000 or less.

Film-forming water soluble carriers are film-forming materials that are hydroxypropylguar, hydroxypropylstarch, poly-N-vinyl-pyrrolidone, copolymers of vinyl pyrrolidone and vinyl acetate, methylcellulose, ethylcellulose, water soluble hydroxyalkyl ethers of cellulose, ethylhydroxyethylcellulose, methyl-hydroxypropylcellulose, chitosan, carboxymethylchitosan arabinogalactan, preferably hydroxyethylcellulose, and more preferably hydroxypropylcellulose. These film-forming water soluble carrier may either be used alone or in combination with one another.

Suitable hydroxypropylcelluloses include but are not limited to KLUCEL® LFF and KLUCEL®HF both commercially available from Hercules Incorporated of Wilmington, Delaware.

The film-forming water soluble carrier comprises from about 1% to 90% of the antiviral composition by weight, preferably from about 5% to 35%, of the antiviral composition by weight, and more preferably from about 10% to 25% of the antiviral composition by weight.

### B. Antiviral Agent(s)

The antiviral agent(s) of the present invention are effective at killing certain strains of viruses such as influenza virus and rhinovirus. Furthermore, because the antiviral agent is encompassed within a water soluble film matrix which does not begin to release until contacted by moisture, the potential for skin irritation in areas contacted by the tissue is greatly reduced.

Suitable antiviral agents are carboxylic acids.

Carboxylic acids include but are not limited to alpha hydroxy acids that are C₁ to C₁₂ saturated, unsaturated, or mixtures thereof of carboxylic acids possessing 1 to 4 carboxylic acid groups and having at least one hydroxyl group substituted on the C₂ alpha carbon with additional hydroxyl and other functionalities (i.e.; phenyl, amino, alkyl, etc.) optionally bound along the carbon chain and aromatic ring(s). A non-inclusive list of alpha hydroxy acids which may be used includes: 2-hydroxyhexanoic acid, 2-hydroxyoctanoic acid, 2-hydroxydecanoic acid, 2-hydroxydodecanoic acid, 2-hydroxycaprylic acid, citric acid, tartaric acid, mandelic acid, malic acid, glycolic acid, lactic acid, gluconic acid, hydroxycaprylic acid, 2-hydroxypropionic acid, 2-hydroxybutanoic acid, 2-hydroxypentanoic acid, and mixtures thereof.

Other examples of carboxylic acids useful with this invention include beta hydroxy acids that are C₁ to C₁₂ saturated, unsaturated, aromatic, or mixtures thereof of carboxylic acids possessing 1 to 4 carboxylic acid groups and having at least one hydroxyl group substituted on the C₃ beta carbon with additional hydroxyl and other functionalities (i.e.; phenyl, amino, hydroxyl, alkyl, etc.) optionally bound along the carbon chain or aromatic ring(s). A list of beta hydroxy acids useful with this invention includes: 3-hydroxyhexanoic acid, 3-hydroxyoctanoic acid, 3-hydroxydecanoic acid, 3-hydroxydodecanoic acid, 3-hydroxycaprylic acid, salicylic acid, 5-octanoyl salicylic acid, 3-hydroxybutanoic acid, 3-hydroxypentanoic acid, 3-hydroxypropionic acid, and mixtures thereof.

A non-inclusive list of other carboxylic acids useful with this invention includes C₁ to C₁₂ saturated, unsaturated, aromatic, or mixtures thereof of carboxylic acids possessing 1 to 4 carboxylic acid groups with optional functional-groups (i.e.; phenyl, amino, hydroxyl, alkyl, etc.) substituted along the carbon chain or on the aromatic ring(s) such as propionic acid, hexanoic acid, octanoic acid, decanoic acid; C₁ to C₁₂ carboxylic adds possessing 1 to 4 carboxylic acid groups wherein a hydroxyl group(s) is substituted on carbon number(s) C₄ or above such as 4-hydroxyhexanoic acid, 5,6-dihydroxyhexanoic acid, 6-hydroxyhexanoic acid, 4-hydroxyoctanoic acid, 5-hydroxyoctanoic acid, 6-hydroxyoctanoic acid, 6,7,8-trihydroxyoctanoic acid, 8-hydroxyoctanoic acid, 4-hydroxydecanoic acid, 5-hydroxydecanoic acid, 6-hydroxydecanoic acid, 7-hydroxydecanoic acid, 8-hydroxydecanoic acid, 9-hydroxydecanoic acid, 10-hydroxydecanoic add, 4-hydroxydodecanoic acid, 5-hydroxydodecanoic acid, 6-hydroxydodecanoic acid, 11-hydroxydodecanoic acid, and 12-hydroxydodecanoic acid; benzoic add; phthalic acid; acetylsalicylic acid; dehydroacetic acid; sorbic acid; succinic acid; glutaric acid; adipic acid; sebacic acid; maleic acid; folic acid; acetic acid; ethylenediaminetetraacetic acid; glycolic acid; and mixtures thereof.

Preferred carboxylic acids useful with this invention include adipic acid, glutaric acid, succinic acid, lactic acid, acetylsalicylic acid, glycolic acid, tartaric acid, citric acid, salicylic acid, or mixtures thereof; more preferred is citric acid, salicylic acid or mixtures thereof; most preferred is salicylic acid. A suitable salicylic acid is available from Rhone- Poulenc SA of Cranbury, New Jersey.

The antiviral agent(s) comprises from 0.1% to 80% of the antiviral composition by weight, preferably from 5% to 70%, of the antiviral composition by weight, and more preferably from 10% to 65% of the antiviral composition by weight.

### C. Optional Surfactant

The antiviral composition may also include an optional nonionic surfactant.

While not wishing to be bound by theory, it is believed that the optional nonionic surfactant used in the antiviral composition serves several important functions.

The surfactant allows the paper to absorb water and mucus at a reasonable rate. Importantly in relation to antiviral activity, the surfactant can function to aid in solubilizing the lipid shell layer of the enveloped class of viruses. This solubilization of the lipid shell enhances the ability of the antiviral acids to penetrate into the virus structure and deactivate it. It should be noted that the antiviral agents of this invention may be made either with or without adding a surfactant.

Examples of suitable nonionic surfactants include but are not limited to alkoxylated alcohols having an hydrophile Lipophile Balance (HLB) of about 8 to 20 and the following formula: 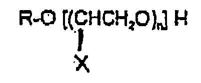 wherein R= C₂ - C₅₀ and may be either branched, unsaturated, or saturated
n = 10 - 40
X = hydrogen, methyl, or ethyl

A preferred alkoxylated alcohol is polyoxypropylene (5) polyoxyethylene (20) cetyl ether commercially available as PROCETYL AWS manufactured by Croda Incorporated of Parsippany, New Jersey.

The optional surfactant comprises from 0.1% to 90% of the antiviral composition by weight, preferably from 10% to 40%, of the antiviral composition by weight, and more preferably from 15% to 30% of the antiviral composition by weight.

### D. Other Optional Ingredients

Other optional ingredients which may be used include but are not limited to thickening agents, dyes, emollients, skin soothing agents, skin sensates, vitamins, and scents. Suitable thickening agents include but are not limited to natural and chemically modified gums such as KAPPA CARAGEENAN gum available from Sigma Aldrich Company of St. Louis, Missouri and hydroxypropylcellulose such as KLUCEL® HF commercially available from Hercules Incorporated of Wilmington, Delaware.

Other optional ingredients comprise from 0.1% to 15% of the antiviral composition by weight, preferably from 0.2% to 10%, of the antiviral composition by weight, and more preferably from 0.3% to 5% of the antiviral composition by weight.

### Tissue Substrate

Though the principle use of this invention is in connection with facial tissues, it is also applicable to other tissue products including but not limited to: bath tissue, table napkins, toweling, and the like. The tissue substrate of the present invention may be conventionally wet pressed or through air dried. The tissue substrate can be of a homogenous or multi-layered construction; and tissue paper products made therefrom can be of a single-ply or multi-ply construction.

The tissue substrate of the present invention may be cellulosic, noncellulosic, or a combination thereof. Suitable tissue substrates may be made according to commonly assigned U.S. Patent Nos.: 3,301,746, issued to Sanford et al. on January 31, 1967; 3,473,576 issued to Amneus on October 21, 1969; 3,573,164 issued to Friedberg et al., on March 30, 1971; 5,812,000 issued to Saivucci et al. on May 21, 1974; 3,821,068 issued to Salvucci et al. on May 21, 1974; 3,974,025, issued to Ayers on August 10, 1976; 3,994,771, issued to Morgan, Jr. et al. on Nov. 30, 1976; 4,191,609 issued to Trokhan on March 4, 1980; 4,208,459 issued to Becker et al. on June 17, 1980; 4,225,382, issued to Keamey et al. on Sept. 30, 1980; 4,239,065 issued to Trokhan on December 16, 1980; 4,300,981 issued to Carstens on November 17, 1981; 4,440,597 issued to Wells et al. on April 3, 1984; 4,528,239 issued to Trokhan on July 9, 1985; 4,637,859 issued to Trokhan on January 20, 1987; 4,919,756 issued to Sawdai on April 24, 1992; 4,981,557 issued to Bjorkquist on January 1, 1991; 5,098,522 issued to Smurkowski on March 24, 1992; 5,217,576 issued to Van Phan on June 8, 1993; 5,223,096 issued to Phan et al. on June 29, 1993; 5,240,562 issued to Phan et al. on August 31, 1993; 5,245,025 issued to Trokhan et al. on June 11, 1994; 5,275,700 issued to Trokhan on January 4, 1994; 5,277,761 issued to Phan et al. on January 11, 1994; 5,279,767 issued to,Phan et al. on January 18, 1994; 5,328,565 issued to Rasch et al., on July 12, 1994; 5,332,118 issued to Muckenfuhs on July 26, 1994; 5,334,289 issued to Trokhan et al. on August 2, 1994; 5,364,504, issued to Smurkoski et al. on November 15, 1994; 5,366,785, issued to Sawdai on November 22, 1994; 5,415,737 issued to Phan et al. on May 16, 1995; 5,443,691 issue to Phan et al. on August 22, 1995; 5,496,624 issued to Stelljes, Jr. et al., on March 5, 1996; 5,500,277 issued to Trokhan et al., on March 19, 1996; 5,503,715 issued to Trokhan et al. on April 2, 1996; 5,510,000 issued to Phan et al. on April 23, 1996; 5,527,428 issued to Trokhan et al. on June 18, 1996; 5,529,664 issued to Trokhan et al. on June 25, 1996; 5,534,326 issued to Trokhan et al. on July 9, 1996; 5,538,595 issued to Trokhan et al., on July 23, 1996; 5,543,067 issued to Phan et al. on August 6, 1996; 5,614,061 issued to Phan et al. on March 25, 1997; 5,628,876 issued to Ayers et al., on May 13, 1997; 5,654,076 issued to Trokhan et al. on August 5, 1997; 5,679,222 issued to Rasch et al., on October 21, 1997; 5,690,790 issued to Headlam et al. on November 25, 1997; 5,760,212 issued to Smith on June 2, 1998; 5,804,036 issued to Phan et al. on September 8, 1998; 5,804,281 issued to Phan et al. on September 8, 1998; 5,820,730 issued to Phan et al. on September 8, 1998; 5,830,317 issued to Vinson et al. on November 3, 1998; 5,846,380 issued to Van Phan et al. on December 8, 1998.

A tissue substrate suitable for the present invention typically will have a basis weight of about 5 pounds to 80 pounds per 3000 square feet (8 to 130 g/sqm), preferably about 6 pounds to 70 pounds per 3000 square feet (10 to 114 g/sqm), more preferably about 7 pounds to 60 pounds per 3000 square feet (11 to 98 g/sqm), and most preferably 8 pounds to 50 pounds per 3000 square feet (13 to 81 g/sqm).

The tissue substrate of the present invention comprises at least one fibrous ply and preferably two or more fibrous plies. The fibrous ply may be noncellulosic, preferably cellulosic, or a combination thereof. The fibrous ply may be layered. An antiviral composition made according to the present invention may be applied to one or more of the fibrous plies. Each fibrous ply has two sides. Side one of the fibrous ply is oriented outwardly toward the user (i.e.; outward side) while side two of the fibrous ply is oriented away from the user (i.e.; the opposite-side). The antiviral composition may be applied to either or both side one or side two of the fibrous ply.

### Moisture Barrier

The tissue product includes one or more moisture barriers. An antiviral composition may optionally be applied to the moisture barrier. The moisture barrier is be joined in a face to face relationship with the fibrous ply or impregnated into the fibrous ply.

Suitable methods for joining fibrous plies with one another and/or with one or more moisture barriers include but are not limited to ply bonding such as disclosed in commonly assigned U.S. Patent Nos.: 3,414,459 issued to Wells on December 3, 1968; 3,867,225 issued to Nystrand on February 18, 1975; 4,481,243 issued to Allen on November 6, 1984; and 5,294,475 issued to McNeil on March 15, 1994.

### Embodiments

The embodiments described below are not intended to be limiting but merely exemplary in nature.

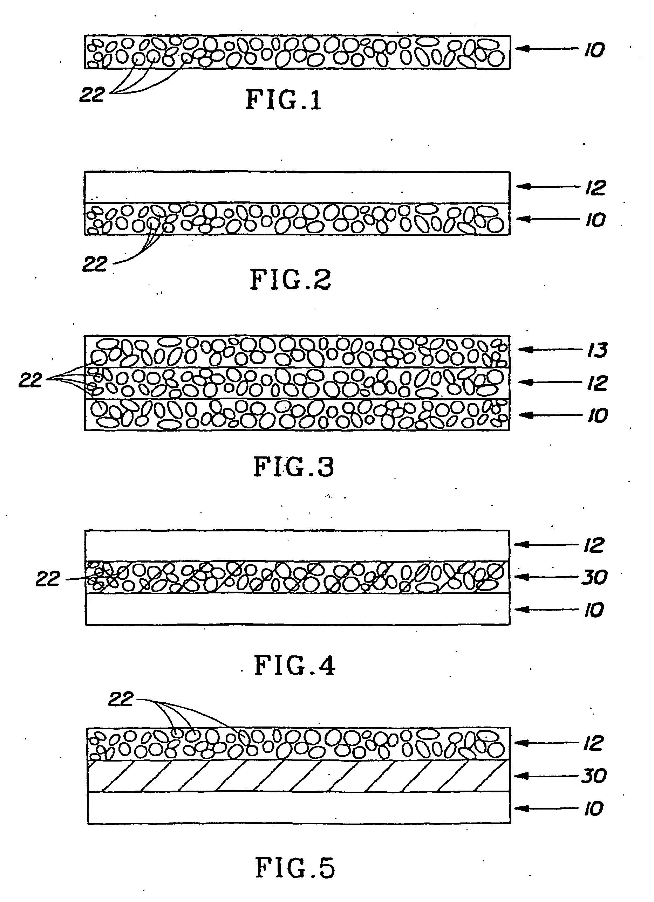

In one embodiment of the present invention shown in Fig. 1, first fibrous ply 10 includes antiviral composition 22.

In a second embodiment of the present invention shown in Fig. 2, first fibrous ply 10 includes antiviral composition 22. Second fibrous ply 12 is joineo in a face to face relationship with first fibrous ply 10.

In a third embodiment of the present invention shown in Fig. 3, first fibrous ply 10 is joined in face to face relationship with second fibrous ply 12 and third fibrous ply 13. Each of the three fibrous plies includes antiviral composition 22.

In a fourth embodiment of the present invention shown in Fig. 4, first fibrous ply 10 is joined in a face to face relationship with moisture barrier 30 which includes antiviral composition 22 and second fibrous ply 12. Moisture barrier 30 is interposed between first fibrous ply 10 and second fibrous ply 12.

In a fifth embodiment of the present invention shown in Fig. 5, first fibrous ply 10 is joined in a face to face relationship with moisture barrier 30 and second fibrous ply 12. Second fibrous ply 12 includes antiviral composition 22. Moisture barrier 30 is interposed between first fibrous ply 10 and second fibrous ply 12.

In a sixth embodiment of the present invention (not shown), a first fibrous ply is joined in face to face relationship with a second fibrous ply and a third fibrous ply. The first fibrous ply and the third fibrous ply each include the antiviral composition of this invention.

This invention is not limited to only one fibrous ply or two fibrous ply embodiments, but can also include embodiments that are not shown utilizing more than two fibrous plies. These embodiments may also optionally include one or more moisture barrier(s). The moisture barrier(s) may either include or not include the antiviral composition. The invention can also include one or more fibrous plies wherein a moisture barrier is impregnated into one or more of the fibrous plies. The moisture barrier impregnated into the fibrous ply can either include or not include the antiviral composition. Furthermore, the fibrous ply into which the moisture barrier is impregnated, can either include or not include the antiviral composition.

The tissues of this invention may also contain combinations of the various embodiments disclosed herein.

### Examples

### Example of Method of Preparation of Antiviral Composition:

Approximately 2168 grams of water were added to a mixing tank. The water was heated to 150° F (65.5°C) and agitated with a LIGHTNIN mixer, Model No. TF2910 commercially available from General Signal of Tulsa, Oklahoma. Approximately 360 grams of powdered hydroxypropylcellulose, (i.e.; a film-forming water soluble carrier commercially sold as KLUCEL® LFF by Hercules Incorporated of Wilmington, Delaware) was added to the water and agitated until a smooth solution (i.e.; no lumps) was formed. The solution was cooled to room temperature.

Approximately 360 grams of a nonionic surfactant (i.e.; polyoxypropylene (5) polyoxyethylene (20) cetyl ether sold as PROCETYL AWS by Croda Incorporated of Parsippany, New Jersey) was added to the cooled solution. The solution was then agitated.

While continuing agitation, approximately 1080 grams of an antiviral agent (i.e.; salicylic acid commercially available from Rhone-Poulenc SA of Cranbury, New Jersey) was added to the solution.

The suspension was transferred to a Hobart mixer (i.e.; Model No. A120 manufactured by Hobart Corporation of Troy, Ohio). Approximately 32 grams of a thickening agent (i.e.; CARAGEENAN gum commercially available from Sigma Aldrich Company of St. Louis, Missouri) was added to the solution.

### Example of Method of Application of Antiviral Composition to the Tissue Substrate and/or Optional Moisture Barrier

Even though described below in terms of application to a tissue web, all of these application methods may also be used interchangeably to apply the antiviral composition to the moisture barrier of this invention.

In preparing tissue paper products containing antiviral compositions according to the present invention, the antiviral composition may be applied to at least one surface of a tissue paper web. Suitable methods include spraying, hot melt spraying, printing (e.g., flexographic printing), coating (e.g., gravure coating), extrusion, or combinations of these application techniques, e.g. spraying the antiviral composition on a rotating surface, such as a calender roll, that then transfers the composition to the surface of the paper web. The antiviral composition can be applied either to one surface of the tissue paper web, or both surfaces.

The antiviral composition can be applied to the tissue paper web either before or after the web has been dried, i.e. a "dry web" addition method. The antiviral composition is applied in an amount of from 1% to 100% by weight of the tissue paper web, preferably from 5% to 60% by weight of the tissue paper web, most preferably from 10% to 25% by weight of the tissue paper web.

The antiviral composition can also be applied non-uniformly to the surface(s) of the tissue paper web. By "non-uniform" is meant that the amount, pattern of distribution, etc. of the antiviral composition can vary over the surface of the paper. For example, some portions of the surface of the tissue paper web can have greater or lesser amounts of antiviral composition, including portions of the surface that do not have any antiviral composition on it.

An example of non-uniform application is where the tissue structure contains differing amounts and differing compositions of various formulations throughout its structure or altematively where some zones may contain no antiviral composition at all.

The antiviral composition can also be applied to the tissue paper web at any point after it has been dried. For example, the antiviral composition can be applied to the tissue paper web after it has been creped from a Yankee dryer, but prior to calendering, i.e., before being passed through calender rolls. The antiviral composition can also be applied to the paper web after it has passed through such calender rolls and prior to being wound up on a parent roll. Usually, it is preferred to apply the antiviral composition to the tissue paper as it is being unwound from a parent roll and prior to being wound up on smaller, finished paper product rolls.

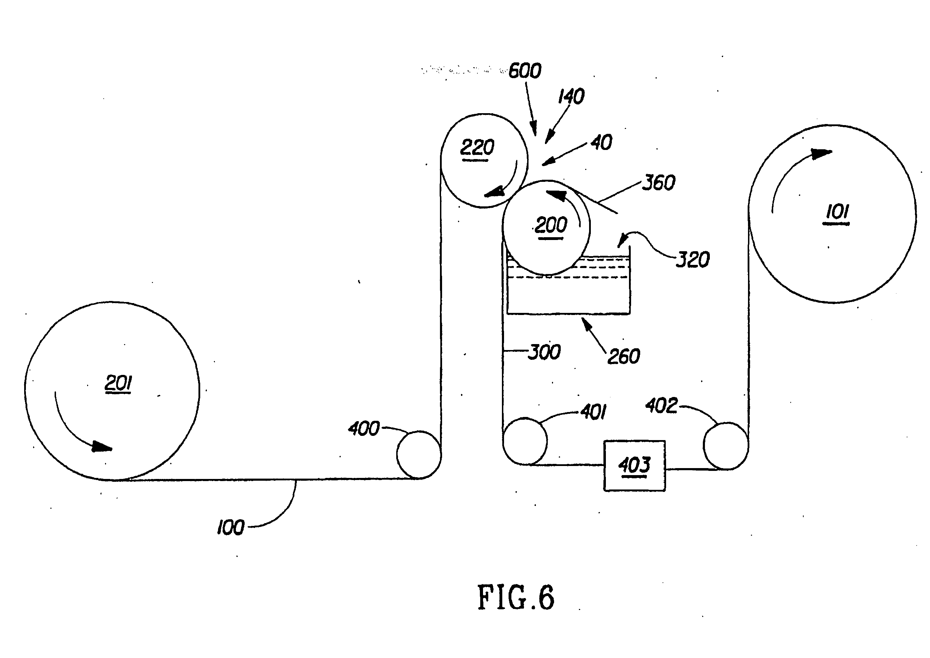

Fig. 6, illustrates a suitable application method involving gravure coating. Referring to Fig. 6, a dried tissue web 100 is unwound from parent tissue roll 201 and advanced around turning roll 400. From turning roll 400, web 100 is advanced to a direct gravure coating station 600 where the antiviral composition is applied to one side of the web. After leaving coating station 600, web 100 becomes treated web 300. The treated web 300 is then advanced around turning roll 401 and sent through drying oven 403. It then proceeds around turning roll 402 and is wound up on antiviral treated tissue product roll 101.

Gravure coating station 600 comprises press 140 which includes drive roll 220 and gravure cylinder 200. As shown in Figure 6, drive roll 220 and gravure cylinder 200 provide nip area 40 through which tissue web 100 passes.

Positioned beneath gravure cylinder 200 is fountain tray 260. Antiviral composition is pumped into fountain tray 260 to provide antiviral composition reservoir 320. As gravure cylinder 200 rotates within reservoir 320, it picks up a quantity of antiviral composition. Excess antiviral composition on gravure cylinder 200 is then removed by doctor blades 360.

Methods of controlling the amount of antiviral composition transferred to web 100 include but are not limited to: (1) adjusting the width of nip area 400 between drive roll 220, and gravure cylinder 200, (2) adjusting the line speed, (3) changing the cell volume of gravure cylinder 200, or (4) changing the solution properties of the antiviral composition (e.g.; surface tension; viscosity; etc.).

## Claims

1. A tissue product comprising a first fibrous ply and an antiviral composition said antiviral composition comprising :
a) a film-forming water soluble carrier(s) wherein said film-forming water soluble carrier makes up from 1% to 90% by weight of said antiviral composition, said film-forming water soluble carrier being poly-N-vinyl-pyrrolidone, copolymers of vinyl pyrrolidone and vinyl acetate, methylcellulose, ethylcellulose, water soluble hydroxyalkyl ethers of cellulose, hydroxyethylcellulose, ethylhydroxyethylcellulose, methylhydroxypropylcellulose, hydroxypropylguar, hydroxypropylstarch, chitosan, carboxymethylchitosan, arabinogalactan, hydroxypropylcellulose, or mixtures thereof or, hydroxypropylcellulose;
b) an antiviral agent(s) wherein said antiviral agent makes up from 0.1% to 80% by weight of said antiviral composition said antiviral agent being C₁ to C₁₂ saturated, unsaturated, or mixtures thereof of carboxylic acids possessing 1 to 4 carboxylic acid groups and having at least one hydroxyl group substituted on the C₂ alpha carbon; C₁ to C₁₂ saturated, unsaturated, aromatic, or mixtures thereof of carboxylic acids possessing 1 to 4 carboxylic acid groups and having at least one hydroxyl group substituted on the C₃ beta carbon; C₁ to C₁₂ saturated, unsaturated, aromatic, or mixtures thereof of carboxylic acids possessing 1 to 4 carboxylic acid groups; C₁ to C₁₂ saturated, unsaturated, aromatic, or mixtures thereof of carboxylic acids possessing 1 to 4 carboxylic acid groups and having a hydroxyl group(s) substituted on carbon number(s) C₄ or above; or mixtures thereof, or adipic acid, glutaric acid, succinic acid, lactic acid, acetylsalicylic acid, glycolic acid, salicylic acid, 5-octanoyl salicylic acid, citric acid, tartaric acid, or mixtures thereof, or salicylic acid
**characterized in that** tissue product further comprises a moisture barrier, wherein said moisture barrier is joined in a face to face relationship with said first fibrous ply or impregnated into said first fibrous ply.

2. The tissue product according to Claim 1 wherein said antiviral composition further comprises a nonionic surfactant(s) whereby said nonionic surfactant makes up from 0.1% to 90% by weight of the antiviral composition, preferably wherein said nonionic surfactant is an alkoxylated alcohol having an Hydrophile Lipophile Balance of about 8 to 20 and the following formula: 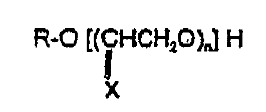 wherein: R= C₂ - C₅₀ and may be either branched, unsaturated, or saturated
n= 10 - 40
X = hydrogen, methyl, or ethyl,
and more preferably wherein said alkoxylated alcohol is polyoxypropylene (5) polyoxyethylene (20) cetyl ether.

3. The tissue product according to Claim 1 or 2 wherein said antiviral composition further comprises a thickening agent, whereby said thickening agent makes up from 0.1% to 15% by weight of the antiviral composition.

4. A tissue product according to Claim 1 wherein said moisture barrier further comprises an antiviral composition, said antiviral composition comprising:
a) a film-forming water soluble carrier(s) wherein said film-forming water soluble carrier makes up from 1% to 90% by weight of said antiviral composition and
b) an antiviral agent(s) wherein said antiviral agent makes up from 0.1% to 80% by weight of said antiviral composition.

5. A tissue product according to any of Claims 1 or 4 further comprising a second fibrous ply, said second fibrous ply joined in a face to face relationship with said first fibrous ply and said moisture barrier, said moisture barrier disposed between said first fibrous ply and said second fibrous ply.

6. A tissue product according to any of Claims 1, 4 or 5 further comprising a second fibrous ply, said second fibrous ply joined in a face to face relationship with said first fibrous ply and said moisture barrier, said moisture barrier disposed between said first fibrous ply and said second fibrous ply, wherein said second fibrous ply includes an antiviral composition, said antiviral composition comprising: .
a) a film-forming water soluble carrier(s) wherein said fitm-forming water soluble carrier makes up from 1% to 90% by weight of said antiviral composition and
b) an antiviral agent(s) wherein said antiviral agent makes up from 0.1% to 80% by weight of said antiviral composition.

7. A tissue product, said tissue product comprising:
a first fibrous ply, a second fibrous ply, and a moisture barrier, said second fibrous ply joined in a face to face relationship with said first fibrous ply and said moisture barrier, said moisture barrier disposed between said first fibrous ply and said second fibrous ply, said moisture barrier including an antiviral composition **characterized in that** said antiviral composition comprises:
a) a film-forming water soluble carrier(s) wherein said film-forming water soluble carrier makes up from 1% to 90% by weight of said antiviral composition, said film-forming water soluble carrier being poly-N-vinyl-pyrrolidone, copolymers of vinyl pyrrolidone and vinyl acetate, methylcellulose, ethylcellulose, water soluble hydroxyalkyl ethers of cellulose, hydroxyethylcellulose, ethylhydroxyethylcellulose, methylhydroxypropylcellulose, hydroxypropylguar, hydroxypropylstarch, chitosan, carboxymethylchitosan, arabinogalactan, hydroxypropylcellulose, or mixtures thereof or, hydroxypropylcellulose;
b) an antiviral agent(s) wherein said antiviral agent makes up from 0.1% to 80% by weight of said antiviral composition said antiviral agent being C₁ to C₁₂ saturated, unsaturated, or mixtures thereof of carboxylic acids possessing 1 to 4 carboxylic acid groups and having at least one hydroxyl group substituted on the C₂ alpha carbon; C₁ to C₁₂ saturated, unsaturated, aromatic, or mixtures thereof of carboxylic acids possessing 1 to 4 carboxylic acid groups and having at least one hydroxyl group substituted on the C₃ beta carbon; C₁ to C₁₂ saturated, unsaturated, aromatic, or mixtures thereof of carboxylic acids possessing 1 to 4 carboxylic acid groups; C₁ to C₁₂ saturated, unsaturated, aromatic, or mixtures thereof of carboxylic acids possessing 1 to 4 carboxylic acid groups and having a hydroxyl group(s) substituted on carbon number(s) C₄ or above; or mixtures thereof, or adipic acid, glutaric acid, succinic acid, lactic acid, acetylsalicylic acid, glycolic acid, salicylic acid, 5-octanoyl salicylic acid, citric acid, tartaric acid, or mixtures thereof, or salicylic acid.

8. A process for making a tissue product, said process comprising the steps of:
(a) providing a tissue web;
(b) applying an antiviral composition to said tissue web, **characterized in that** said antiviral composition comprises:
i) a film-forming water soluble carrier(s) wherein said film-forming water soluble carrier makes up from 1% to 90% by weight of said antiviral composition, said film-forming water soluble carrier being poly-N-vinyl-pyrrolidone, copolymers of vinyl pyrrolidone and vinyl acetate, methylcellulose, ethylcellulose, water soluble hydroxyalkyl ethers of cellulose, hydroxyethylcellulose, ethylhydroxyethylcellulose, methylhydroxypropylcellulose, hydroxypropylguar, hydroxypropylstarch, chitosan, carboxymethylchitosan, arabinogalactan, hydroxypropylcellulose, or mixtures thereof or, hydroxypropylcellulose;
ii) an antiviral agent(s) wherein said antiviral agent makes up from 0.1 % to 80% by weight of said antiviral composition, said antiviral agent being C₁ to C₁₂ saturated, unsaturated, or mixtures thereof of carboxylic acids possessing 1 to 4 carboxylic acid groups and having at least one hydroxyl group substituted on the C₂ alpha carbon; C₁ to C₁₂ saturated, unsaturated, aromatic, or mixtures thereof of carboxylic acids possessing 1 to 4 carboxylic acid groups and having at least one hydroxyl group substituted on the C₃ beta carbon; C₁ to C₁₂ saturated, unsaturated, aromatic, or mixtures thereof of carboxylic acids possessing 1 to 4 carboxylic acid groups; C₁ to C₁₂ saturated, unsaturated, aromatic, or mixtures thereof of carboxylic acids possessing 1 to 4 carboxylic acid groups and having a hydroxyl group(s) substituted on carbon number(s) C₄ or above; or mixtures thereof, or adipic acid, glutaric acid, succinic acid, lactic acid, acetylsalicylic acid, glycolic acid, salicylic acid, 5-octanoyl salicylic acid, citric acid, tartaric acid, or mixtures thereof, or salicylic acid.
and wherein said process further comprises the step of providing a moisture barrier wherein said moisture barrier is impregnated into said tissue web or joined to said tissue web in a face to face relationship.

## Patentansprüche

1. Tissue-Produkt mit einer ersten faserigen Lage und einer Antivirus-Zusammensetzung, wobei die Antivirus-Zusammensetzung aufweist:
a) (einen) Folien-bildende(n), wasserlösliche(n) Träger, wobei der Folien-bildende, wasserlösliche Träger 1 bis 90 Gew.% der Antivirus-Zusammensetzung bildet,
wobei der Folien-bildende, wasserlösliche Träger Poly-N-Vinyl-Pyrrolidon, Copolymere von Vinyl-Pyrrolidon und Vinyl-Acetat, Methylzellulose, Ethylzellulose, wasserlösliche Hydroxyalkylether von Zellulose, Hydroxyethylzellulose, Ethylhydroxyethylzellulose, Methylhydroxypropylzellulose, Hydroxypropylguar, Hydroxypropylstärke, Chitosan, Carboxymethylchitosan, Arbabinogalaktan, Hydroxypropylzellulose oder Gemische davon oder Hydroxypropylzellulose ist;
b) (ein) Antivirus-Mittel, wobei das Antivirus-Mittel 0,1 bis 80 Gew.-% der Antivirus-Zusammensetzung bildet,
wobei das Antivirus-Mittel C₁-bis C₁₂-gesättigte, ungesättigte oder Gemische davon von Carbonsäuren ist, die 1 bis 4 Carbonsäure-Gruppen besitzen und mindestens eine Hydroxylgruppe aufweisen, die auf dem C₂-Alpha-Kohlenstoff ersetzt ist; C₁-bis C₁₂-gesättigte, ungesättigte, aromatische oder Gemische davon von Carbonsäuren, die 1 bis 4 Carbonsäure-Gruppen besitzen und mindestens eine Hydroxylgruppe aufweisen, die auf dem C₃-Beta-Kohlenstoff ersetzt ist; C₁-bis C₁₂-gesättigte, ungesättigte, aromatische oder Gemische davon von Carbonsäure-Gruppen, die 1 bis 4 Carbonsäure-Gruppen besitzen; C₁-bis C₁₂-gesättigte, ungesättigte, aromatische oder Gemische davon von Carbonsäuren, die 1 bis 4 Carbonsäure-Gruppen besitzen und (eine) Hydroxylgruppe(n) aufweisen, die auf (einer) Kohlenstoff-Anzahl(en) C₄ oder höher ersetzt ist/sind; oder Gemische davon oder Adipinsäure, Glutarsäure, Succinsäure, Milchsäure, Acetylsalicylsäure, Glykolsäure, Salicylsäure, 5-Octanoyl-Salicylsäure, Zitronensäure, Weinsäure oder Gemische davon, oder Salicylsäure,
**dadurch gekennzeichnet, dass**
das Tissue-Produkt ferner eine Feuchtigkeitssperre umfasst, wobei die Feuchtigkeitssperre in gegenüberliegender Beziehung mit der ersten faserigen Lage verbunden ist oder in die erste faserige Lage imprägniert ist.

2. Tissue-Produkt nach Anspruch 1, wobei die Antivirus-Zusammensetzung ferner (ein) nicht-ionische(s) Tensid(e) aufweist, wodurch das nicht-ionische Tensid 0,1 bis 90 Gew.-% der Antivirus-Zusammensetzung bildet, wobei vorzugsweise das nicht-ionische Tensid ein alkoxylierter Alkohol mit einem hydrophilen lipophilen Gleichgewicht von ungefähr 8 bis 20 ist und die folgende Formel auf weist: 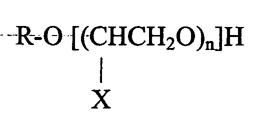 wobei: R = C₂-C₅₀ und entweder verzweigt, ungesättigt oder gesättigt sein kann,
n= 10-40
X = Wasserstoff, Methyl oder Ethyl,
und wobei bevorzugter der alkoxylierte Alkohol Polyoxypropylen (5) Polyoxyethylen (20) Cetyl Ether ist.

3. Tissue-Produkt nach Anspruch 1 oder 2, wobei die Antivirus-Zusammensetzung ferner ein Verdickungsmittel aufweist, wobei das Verdickungsmittel 0,1 bis 15 Gew.-% der Antivirus-Zusammensetzung bildet.

4. Tissue-Produkt nach Anspruch 1, wobei die Feuchtigkeitssperre ferner eine Antivirus-Zusammensetzung aufweist, wobei die Antivirus-Zusammensetzung umfasst:
a) (einen) Folien-bildende(n), wasserlösliche(n) Träger, wobei der Folien-bildende, wasserlösliche Träger 1 bis 90 Gew.-% der Antivirus-Zusammensetzung bildet, und
b) (ein) Antivirus-Mittel, wobei das Antivirus-Mittel 0,1 bis 80 Gew.-% der Antivirus-Zusammensetzung bildet.

5. Tissue-Produkt nach einem der Ansprüche 1 oder 4, ferner umfassend eine zweite faserige Lage, wobei die zweite faserige Lage in gegenüberliegender Beziehung mit der ersten faserigen Lage und der Feuchtigkeitssperre verbunden ist, wobei die Feuchtigkeitssperre zwischen der ersten faserigen Lage und der zweiten faserigen Lage angeordnet ist.

6. Tissue-Produkt nach einem der Ansprüche 1, 4 oder 5, ferner umfassend eine zweite faserige Lage, wobei die zweite faserige Lage in gegenüberliegender Beziehung mit der ersten faserigen Lage und der Feuchtigkeitssperre verbunden ist, wobei die Feuchtigkeitssperre zwischen der ersten faserigen Lage und der zweiten faserigen Lage angeordnet ist,
wobei die zweite faserige Lage eine Antivirus-Zusammensetzung aufweist, wobei die Antivirus-Zusammensetzung umfasst:
a) (einen) Folien-bildende(n), wasserlösliche(n) Träger, wobei der Folien-bildende, wasserlösliche Träger 1 bis 90 Gew.-% der Antivirus-Zusammensetzung bildet, und
b) (ein) Antivirus-Mittel, wobei das Antivirus-Mittel 0,1 bis 80 Gew.-% der Antivirus-Zusammensetzung bildet.

7. Tissue-Produkt, wobei das Tissue-Produkt umfasst:
eine erste faserige Lage, eine zweite faserige Lage, eine Feuchtigkeitssperre, wobei die zweite faserige Lage in einer gegenüberliegenden Beziehung mit der ersten faserigen Lage und der Feuchtigkeitssperre verbunden ist, wobei die Feuchtigkeitssperre zwischen der ersten faserigen Lage und der zweiten faserigen Lage angeordnet ist, wobei die Feuchtigkeitssperre eine Antivirus-Zusammensetzung aufweist, **dadurch gekennzeichnet, dass** die Antivirus-Zusammensetzung umfasst:
a) (einen) Folien-bildende(n), wasserlösliche(n) Träger, wobei der Folien-bildende, wasserlösliche Träger 1 bis 90 Gew.-% der Antivirus-Zusammensetzung bildet,
wobei der Folien-bildende, wasserlösliche Träger Poly-N-Vinyl-Pyrrolidon, Copolymere von Vinyl-Pyrrolidon und Vinyl-Acetat, Methylzellulose, Ethylzellulose, wasserlösliche Hydroxyalkylether von Zellulose, Hydroxyethylzellulose, Ethylhydroxyethylzellulose, Methylhydroxypropylzellulose, Hydroxypropylguar, Hydroxypropylstärke, Chitosan, Carboxymethylchitosan, Arbabinogalaktan, Hydroxypropylzellulose oder Gemische davon oder Hydroxypropylzellulose ist;
b) (ein) Antivirus-Mittel, wobei das Antivirus-Mittel 0,1 bis 80 Gew.-% der Antivirus-Zusammensetzung bildet,
wobei das Antivirus-Mittel C₁-bis C₁₂-gesättigte, ungesättigte oder Gemische davon von Carbonsäuren ist, die 1 bis 4 Carbonsäure-Gruppen besitzen und mindestens eine Hydroxylgruppe aufweisen, die auf dem C₂-Alpha-Kohlenstoff ersetzt ist; C₁₋bis C₁₂-gesättigte, ungesättigte, aromatische oder Gemische davon von Carbonsäuren, die 1 bis 4 Carbonsäure-Gruppen besitzen und mindestens eine Hydroxylgruppe aufweisen, die auf dem C₃-Beta-Kohlenstoff ersetzt ist; C₁-bis C₁₂-gesättigte, ungesättigte, aromatische oder Gemische davon von Carbonsäure-Gruppen, die 1 bis 4 Carbonsäure-Gruppen besitzen; C₁-bis C₁₂-gesättigte, ungesättigte, aromatische oder Gemische davon von Carbonsäuren, die 1 bis 4 Carbonsäure-Gruppen besitzen und (eine) Hydroxylgruppe(n) aufweisen, die auf (einer) Kohlenstoff-Anzahl(en) C₄ oder höher ersetzt ist/sind; oder Gemische davon oder Adipinsäure, Glutarsäure, Succinsäure, Milchsäure, Acetylsalicylsäure, Glykolsäure, Salicylsäure, 5-Octanoyl-Salicylsäure, Zitronensäure, Weinsäure oder Gemische davon, oder Salicylsäure.

8. Verfahren zur Herstellung eines Tissue-Produktes, wobei das Verfahren die Schritte umfasst:
(a) Bereitstellen einer Tissue-Bahn;
(b) Aufbringen einer Antivirus-Zusammensetzung auf die Tissue-Bahn, **dadurch gekennzeichnet, dass** die Antivirus-Zusammensetzung umfasst:
i) (einen) Folien-bildende(n), wasserlösliche(n) Träger, wobei der Folien-bildende, wasserlösliche Träger 1 bis 90 Gew.-% der Antivirus-Zusammensetzung bildet,
wobei der Folien-bildende, wasserlösliche Träger Poly-N-Vinyl-Pyrrolidon, Copolymere von Vinyl-Pyrrolidon und Vinyl-Acetat, Methylzellulose, Ethylzellulose, wasserlösliche Hydroxyalkylether von Zellulose, Hydroxyethylzellulose, Ethylhydroxyethylzellulose, Methylhydroxypropylzellulose, Hydroxypropylguar, Hydroxypropylstärke, Chitosan, Carboxymethylchitosan, Arbabinogalaktan, Hydroxypropylzellulose oder Gemische davon oder Hydroxypropylzellulose ist;
ii) (ein) Antivirus-Mittel, wobei das Antivirus-Mittel 0,1 bis 80 Gew.-% der Antivirus-Zusammensetzung bildet,
wobei das Antivirus-Mittel C₁-bis C₁₂-gesättigte, ungesättigte oder Gemische davon von Carbonsäuren ist, die 1 bis 4 Carbonsäure-Gruppen besitzen und mindestens eine Hydroxylgruppe aufweisen, die auf dem C₂-Alpha-Kohlenstoff ersetzt ist; C₁₋bis C₁₂-gesättigte, ungesättigte, aromatische oder Gemische davon von Carbonsäuren, die 1 bis 4 Carbonsäure-Gruppen besitzen und mindestens eine Hydroxylgruppe aufweisen, die auf dem C₃-Beta-Kohlenstoff ersetzt ist; C₁-bis C₁₂-gesättigte, ungesättigte, aromatische oder Gemische davon von Carbonsäure-Gruppen, die 1 bis 4 Carbonsäure-Gruppen besitzen; C₁-bis C₁₂-gesättigte, ungesättigte, aromatische oder Gemische davon von Carbonsäuren, die 1 bis 4 Carbonsäure-Gruppen besitzen und (eine) Hydroxylgruppe(n) aufweisen, die auf (einer) Kohlenstoff-Anzahl(en) C₄ oder höher ersetzt ist/sind; oder Gemische davon oder Adipinsäure, Glutarsäure, Succinsäure, Milchsäure, Acetylsalicylsäure, Glykolsäure, Salicylsäure, 5-Octanoyl-Salicylsäure, Zitronensäure, Weinsäure oder Gemische davon, oder Salicylsäure;
und wobei das Verfahren ferner den Schritt des Bereitstellens einer Feuchtigkeitssperre aufweist, wobei die Feuchtigkeitssperre in die Tissue-Bahn imprägniert ist oder mit der Tissue-Bahn in einer gegenüberliegenden Beziehung verbunden ist.

## Revendications

1. Produit tissulaire comprenant un premier pli fibreux et une composition antivirale, ladite composition antivirale comprend:
a) un (des) support(s) filmogène(s) soluble(s) dans l'eau, ledit support filmogène soluble dans l'eau constituant de 1 % à 90 % en poids de ladite composition antivirale,
ledit support filmogène soluble dans l'eau étant la poly-N-vinyl-pyrrolidone, les copolymères de la vinyl pyrrolidone et de l'acétate de vinyle, la méthylcellulose, l'éthylcellulose, les éthers hydroxyalkyliques de la cellulose solubles dans l'eau, l'hydroxyéthylcellulose, l'éthylhydroxyéthylcellulose, la méthylhydroxypropylcellulose, l'hydroxypropylguar, l'hydroxypropylamidon, le chitosan, le carboxyméthylchitosan, l'arabinogalactane, l'hydroxypropylcellulose ou les mélanges de ceux-ci, ou l'hydroxypropylcellulose ; et
b) un (des) agent(s) antiviral/antiviraux, ledit agent antiviral susdit constituant de 0,1 % à 80 % en poids de ladite composition antivirale,
ledit agent antiviral étant les acides carboxyliques en C₁ à C₁₂ saturés, insaturés ou leurs mélanges, possédant 1 à 4 groupements acide carboxylique et ayant au moins un groupement hydroxyle substitué sur le carbone alpha en C₂ ; les acides carboxyliques en C₁ à C₁₂ saturés, insaturés, aromatiques, ou leurs mélanges, possédant 1 à 4 groupements acide carboxylique et ayant au moins un groupement hydroxyle substitué sur le carbone bêta en C₃ ; les acides carboxyliques en C₁ à C₁₂ saturés, insaturés, aromatiques ou leurs mélanges, possédant 1 à 4 groupements acide carboxylique ; les acides carboxyliques en C₁ à C₁₂ saturés, insaturés, aromatiques ou leurs mélanges, possédant 1 à 4 groupements acide carboxylique et ayant un (des) groupement(s) hydroxyle substitué(s) sur le(s) nombre(s) de carbone C₄ ou au-dessus ; ou leurs mélanges ; ou l'acide adipique, l'acide glutarique, l'acide succinique, l'acide lactique, l'acide acétylsalicylique, l'acide glycolique, l'acide salicylique, l'acide octanoyl-5 salicylique, l'acide citrique, l'acide tartrique, ou leurs mélanges ; ou l'acide salicylique ;
**caractérisé en ce que** ledit produit tissulaire comprend de plus une barrière à l'humidité, ladite barrière à l'humidité étant jointe dans une relation face à face au premier pli fibreux ou imprégnée dans ledit premier pli fibreux.

2. Produit tissulaire selon la revendication 1, dans lequel la composition antivirale comprend de plus un (des) agent(s) de surface non-ioniques, l'agent de surface non-ionique constituant de 0,1 % à 90 % en poids de la composition antivirale, dans laquelle de préférence ledit agent de surface non-ionique est un alcool alcoxylé ayant une balance hydrophile lipophile (ou HLB) de 8 à 20 et la formule suivante : 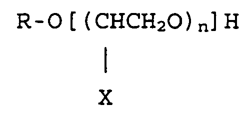 dans laquelle : R = C₂ - C₅₀ et peut être soit ramifié, insaturé ou saturé
n = 10 - 40
X = hydrogène, méthyle ou éthyle
et plus préférablement dans laquelle ledit alcool alcoxylé est le polyoxypropylène (5) polyoxyéthylène (20) céthyl éther.

3. Produit tissulaire selon la revendication 1 ou 2, dans lequel ladite composition antivirale comprend encore un épaississant, ledit agent épaississant constituant de 0,1 % à 15 % en poids de la composition antivirale.

4. Produit tissulaire selon la revendication 1, dans lequel la barrière à l'humidité comprend de plus une composition antivirale, ladite composition antivirale comprenant :
a) un (des) support(s) filmogène(s) soluble(s) dans l'eau, ledit support filmogène soluble dans l'eau constituant de 1 % à 90 % en poids de ladite composition antivirale; et
b) un (des) agent(s) antiviral/antiviraux, ledit agent antiviral constituant 0,1 % à 80 % en poids de ladite composition antivirale.

5. Produit tissulaire selon l'une des revendications 1 ou 4, comprenant de plus un second pli fibreux, ledit second pli fibreux étant joint dans une relation face à face audit premier pli fibreux et à ladite barrière à l'humidité, ladite barrière à l'humidité étant disposée entre ledit premier pli fibreux et ledit second pli fibreux.

6. Produit tissulaire selon l'une des revendications 1, 4 ou 5, comprenant de plus un second pli fibreux, le second pli fibreux étant joint dans une relation face à face audit premier pli fibreux et à ladite barrière à l'humidité, ladite barrière à l'humidité étant disposée entre ledit premier pli fibreux et ledit second pli fibreux, dans lequel ledit second pli fibreux comprend une composition antivirale, ladite composition antivirale comprenant :
a) un (des) support(s) filmogène(s) soluble(s) dans l'eau, ledit support filmogène soluble dans l'eau constituant de 1 % à 90 % en poids de ladite composition antivirale ; et
b) un (des) agent(s) antiviral/antiviraux, ledit agent antiviral constituant 0,1 % à 80 % en poids de ladite composition antivirale.

7. Produit tissulaire, le produit tissulaire comprenant :
un premier pli fibreux, un second pli fibreux, et une barrière à l'humidité, ledit second pli fibreux étant joint dans une relation face à face audit premier pli fibreux et à ladite barrière à l'humidité, ladite barrière à l'humidité étant disposée entre ledit premier pli fibreux et ledit second pli fibreux, ladite barrière à l'humidité comprenant une composition antivirale, **caractérisé en ce que** la composition antivirale comprend:
a) un (des) support(s) filmogène(s) soluble(s) dans l'eau, ledit support filmogène soluble dans l'eau constituant de 1 % à 90 % en poids de ladite composition antivirale,
ledit support filmogène soluble dans l'eau étant la poly-N-vinyl-pyrrolidone, les copolymères de la vinyl pyrrolidone et de l'acétate de vinyle, la méthylcellulose, l'éthylcellulose, les éthers hydroxyalkyliques de la cellulose solubles dans l'eau, l'hydroxyéthylcellulose, l'éthylhydroxyéthylcellulose, la méthylhydroxypropylcellulose, l'hydroxypropylguar, l'hydroxypropylamidon, le chitosan, le carboxyméthylchitosan, l'arabinogalactane, l'hydroxypropylcellulose ou les mélanges de ceux-ci, ou l'hydroxypropylcellulose ;
b) un (des) agent(s) antiviral/antiviraux, ledit agent antiviral constituant 0,1 % à 80 % en poids de ladite composition antivirale,
ledit agent antiviral étant les acides carboxyliques en C₁ à C₁₂ saturés, insaturés ou leurs mélanges, possédant 1 à 4 groupements acide carboxylique et ayant au moins un groupement hydroxyle substitué sur le carbone alpha en C₂ ; les acides carboxyliques en C₁ à C₁₂ saturés, insaturés, aromatiques, ou leurs mélanges, possédant 1 à 4 groupements acide carboxylique et ayant au moins un groupement hydroxyle substitué sur le carbone bêta en C₃ ; les acides carboxyliques en C₁ à C₁₂ saturés, insaturés, aromatiques ou leurs mélanges, possédant 1 à 4 groupements acide carboxylique ; les acides carboxyliques en C₁ à C₁₂ saturés, insaturés, aromatiques ou leurs mélanges, possédant 1 à 4 groupements acide carboxylique et ayant un (des) groupement(s) hydroxyle substitué(s) sur le(s) nombre(s) de carbone C₄ ou au-dessus ; ou leurs mélanges ; ou l'acide adipique, l'acide glutarique, l'acide succinique, l'acide lactique, l'acide acétylsalicylique, l'acide glycolique, l'acide salicylique, l'acide octanoyl-5 salicylique, l'acide citrique, l'acide tartrique, ou leurs mélanges ; ou l'acide salicylique.

8. Procédé pour confectionner un produit tissulaire, procédé comprenant les étapes de :
a) fourniture d'une nappe tissulaire ;
b) application d'une composition antivirale sur ladite nappe tissulaire, **caractérisé en ce que** ladite composition antivirale comprend:
i) un (des) support(s) filmogène(s) soluble(s) dans l'eau, ledit support filmogène soluble dans l'eau constituant de 1 % à 90 % en poids de la composition antivirale,
ledit support filmogène soluble dans l'eau étant la poly-N-vinyl-pyrrolidone, les copolymères de la vinyl pyrrolidone et de l'acétate de vinyle, la méthylcellulose, l'éthylcellulose, les éthers hydroxyalkyliques de la cellulose solubles dans l'eau, l'hydroxyéthylcellulose, l'éthylhydroxyéthylcellulose, la méthylhydroxypropylcellulose,
l'hydroxypropylguar, l'hydroxypropylamidon, le chitosan, le carboxyméthylchitosan, l'arabinogalactane, l'hydroxypropylcellulose ou les mélanges de ceux-ci, ou l'hydroxypropylcellulose ; et
ii) un (des) agent(s) antiviral/antiviraux, ledit agent antiviral constituant de 0,1 % à 80 % en poids de ladite composition antivirale,
ledit agent antiviral étant les acides carboxyliques en C₁ à C₁₂ saturés, insaturés ou leurs mélanges, possédant 1 à 4 groupements acide carboxylique et ayant au moins un groupement hydroxyle substitué sur le carbone alpha en C₂ ; les acides carboxyliques en C₁ à C₁₂ saturés, insaturés, aromatiques, ou leurs mélanges, possédant 1 à 4 groupements acide carboxylique et ayant au moins un groupement hydroxyle substitué sur le carbone bêta en C₃ ; les acides carboxyliques en C₁ à C₁₂ saturés, insaturés, aromatiques ou leurs mélanges, possédant 1 à 4 groupements acide carboxylique; les acides carboxyliques en C₁ à C₁₂ saturés, insaturés, aromatiques ou leurs mélanges, possédant 1 à 4 groupements acide carboxylique et ayant un (des) groupement(s) hydroxyle substitué(s) sur le(s) nombre(s) de carbone C₄ ou au-dessus ; ou leurs mélanges ; ou l'acide adipique, l'acide glutarique, l'acide succinique, l'acide lactique, l'acide acétylsalicylique, l'acide glycolique, l'acide salicylique, l'acide octanoyl-5 salicylique, l'acide citrique, l'acide tartrique, ou leurs mélanges ; ou l'acide salicylique,
et ledit procédé comprenant en outre l'opération de fourniture d'une barrière à l'humidité, ladite barrière à l'humidité étant imprégnée dans ladite nappe tissulaire ou jointe dans une relation face à face à ladite nappe tissulaire.
